Europäisches Patentamt

European Patent Office

Office européen des brevets

(11) Veröffentlichungsnummer: **0 043 572**
A1

(12) **EUROPÄISCHE PATENTANMELDUNG**

(21) Anmeldenummer: **81105182.0**

(22) Anmeldetag: **04.07.81**

(51) Int. Cl.³: **B 61 L 27/00,** B 61 L 3/12,
H 04 B 7/26

(30) Priorität: **09.07.80 DE 3025930**

(43) Veröffentlichungstag der Anmeldung: **13.01.82**
**Patentblatt 82/2**

(84) Benannte Vertragsstaaten: **AT CH DE FR GB IT LI NL**

(71) Anmelder: **Licentia Patent-Verwaltungs-GmbH,
Theodor-Stern-Kai 1, D-6000 Frankfurt/Main 70 (DE)**

(72) Erfinder: **Brosch, Bruno, Dipl.-Ing., Römerstrasse 27,
D-7900 Ulm (DE)**
Erfinder: **Pehnack, Helmut, Dipl.-Ing.,
Lichtensteinstrasse 9, D-7901 Dornstadt (DE)**
Erfinder: **Reinhold, Gerhard, Dr.-Ing., Kelternweg 9,
D-7900 Ulm (DE)**

(74) Vertreter: **Schickle, Gerhard, Dipl.-Ing. et al, Licentia
Patent-Verwaltungs-GmbH Theodor-Stern-Kai 1,
D-6000 Frankfurt/Main 70 (DE)**

(54) Funksystem mit längs vorgegebener Strecken beweglichen Sende-Empfangsstationen.

㉗ Funksystem zum Austausch von Nachrichtentelegrammen zwischen sich längs vorgegebener Strecken bewegenden Sende-Empfangsstationen und längs dieser Strecken in vorgegebenen Abständen angeordneten, in beiden Streckenrichtungen wirksamen Sende-Empfangsstationen, bei dem die Stationen einer Strecke mit einer zentralen Sende-Empfangsstation in Verbindung stehen. Es soll eine Aufwandsverringerung erreicht werden und Störungen eingeschränkt bzw. vermieden werden, die durch den gleichzeitigen Betrieb benachbarter Sende-Empfangsstationen auftreten können. Dazu errechnet die zentrale Sende-Empfangsstation den Ort jeder beweglichen Sende-Empfangsstation zum Zeitpunkt des nächsten auszutauschenden Nachrichtentelegramms und schaltet dann nur die dem errechneten Ort nächst befindliche Station an der Strecke ein zum Austausch des Nachrichtentelegramms.

0043572

Licentia Patent-Verwaltungs-GmbH     NE2-UL/Bl/hä
Theodor-Stern-Kai 1            UL 80/51
D-6000 Frankfurt 70           AZ: P 30 25 930.4

Funksystem mit längs vorgegebener Strecken beweglichen
Sende-Empfangsstationen

Die Erfindung betrifft ein Funksystem nach dem Oberbegriff des Anspruchs 1. Ein solches Funksystem ist aus
der DE-OS 26 44 206 bekannt.

Die genannten Funksysteme werden insbesondere bei der
linienförmigen Beeinflussung von Fahrzeugen im Schienenverkehr eingesetzt. Zur Gewährleistung eines sicheren
Nachrichtenaustauschs zwischen den Fahrzeugen und einer
zentralen Sende-Empfangsstation überlappen sich die
Sende- bzw. Empfangsbereiche der längs der Strecke angeordneten Stationen und sind immer alle Stationen eines
größeren Streckenabschnitts eingeschaltet. Dabei arbeiten manchmal die Stationen eines Übertragungsabschnitts
im Gleichwellenbetrieb, wie z. B. gemäß der o. a. DE-OS
26 44 206. Im Normalfall ist aber nicht ein gesamter
Streckenabschnitt mit Fahrzeugen besetzt, und es ist im

...

0043572

Grunde ein nicht notwendiger Aufwand, alle Sende-Empfangsstationen ständig in Betrieb zu halten.

Der Erfindung liegt daher die Aufgabe zugrunde, bei einem Funksystem der eingangs genannten Art eine Aufwandsverringerung zu erreichen und Störungen einzuschränken bzw. zu vermeiden, die durch den gleichzeitigen Betrieb benachbarter Sende-Empfangsstationen auftreten können.

Die Erfindung ist im Patentanspruch 1 beschrieben. Die weiteren Ansprüche beinhalten vorteilhafte Weiterbildungen oder Ausführungsformen der Erfindung.

Die Erfindung setzt voraus, daß die zentrale Sende-Empfangsstation ständig folgende Parameter der beweglichen Stationen überwacht und kennt, wie dies z. B. bei der linienförmigen Zugbeeinflussung der Deutschen Bundesbahn üblich ist: Den Fahrort, die Fahrrichtung, die Ist-Geschwindigkeit und den Telegrammzyklus. Aus diesen Daten berechnet nun die zentrale Station den Ort der beweglichen Station zum Zeitpunkt des nächsten Nachrichtentelegramms und schaltet dann nur die nächstbefindliche Sende-Empfangsstation entlang der Strecke ein.

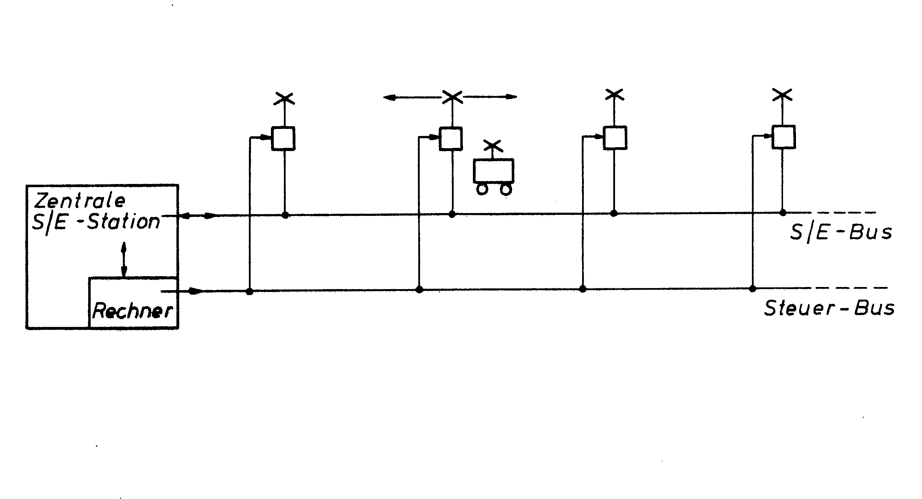

Die Figur zeigt einen möglichen Aufbau für ein solches Funknetz. Entlang einer Strecke sind fortlaufend Sende-Empfangsstationen angeordnet, die in beiden Streckenrichtungen senden bzw. empfangen. Die Stationen sind über eine Sende-Empfangsleitung (S/E-Bus) mit einer zentralen Sende-Empfangsstation verbunden. An eine bewegliche Sende-Empfangsstation werden Fahrbefehle usw. übermittelt; von der beweglichen Station werden zur zentralen Station Informationen über den Fahrort, die Geschwindigkeit und die Fahrrichtung übermittelt und

. . .

0043572

dort in einen Rechner ausgewertet. Über eine Steuerleitung (Steuer-Bus) schaltet die zentrale Station die Sende-Empfangsstation an der Strecke ein, die der beweglichen Station beim nächsten Nachrichtentelegramm am nächsten sein wird.

Kommt keine Verbindung zustande, so schaltet die zentrale Station die nächstfolgende Station an der Strecke ein. So kann auch systembedingt der Ausfall von Sende-Empfangsstationen an der Strecke erkannt werden, was zu einer Steigerung der Systemverfügbarkeit führt. Zur Verringerung der Fehleroffenbarungszeiten bei niedrigem Verkehrsaufkommen können zusätzlich ortsfeste S/E-Geräte eingesetzt werden, die über Prüftelegramme angesprochen werden. Der Ausfall der Prüfempfänger wird durch fehlende Antworten beim Tasten meherer Streckensender erkannt.

Die erfindungsgemäße Einzelsendertastung vermeidet Interferenzstörungen, die beim Gleichwellenfunk auftreten. Weiter können gegenüber dieser Betriebsart geringere Anforderungen an die Trägerstabilität gestellt werden, was zu Kosteneinsparungen führt. Da auch eine Laufzeitkompensation entfällt, gibt es keine von daher rührenden Einschränkungen in der Übertragungsrate. Die Wahl des Modulationsverfahrens ist relativ frei.

0043572

— 4 —

Licentia Patent-Verwaltungs-GmbH      NE2-UL/Bl/hä
Theodor-Stern-Kai 1                   UL 80/51
D-6000 Frankfurt 70


Patentansprüche


1. Funksystem zum Austausch von Nachrichtentelegrammen
zwischen sich längs vorgegebener Strecken bewegenden
Sende-Empfangsstationen und längs dieser Strecken in
vorgegebenen Abständen angeordneten, in beiden Streckenrichtungen wirksamen Sende-Empfangsstationen, bei dem
die Stationen einer Strecke mit einer zentralen Sende-
Empfangsstation in Verbindung stehen, <u>dadurch gekenn-
zeichnet</u>, daß die zentrale Sende-Empfangsstation den
Ort jeder beweglichen Sende-Empfangsstation zum Zeitpunkt des nächsten auszutauschenden Nachrichtentelegramms errechnet und dann nur die dem errechneten Ort
nächstbefindliche Station an der Strecke einschaltet
zum Austausch des Nachrichtentelegramms.

2. Funksystem nach Anspruch 1, dadurch gekennzeichnet,
daß die zentrale Sende-Empfangsstation, wenn keine
Verbindung über die eingeschaltete Station zustande

...

kommt, die nächstfolgende Station an der Strecke einschaltet.

3. Funksystem zum Austausch von Nachrichtentelegrammen
zwischen sich längs vorgegebener Strecke bewegenden
Sende-Empfangsstationen und längs dieser Strecken in
vorgegebenen Abständen angeordneten, in beiden Streckenrichtungen wirksamen Sende-Empfangsstationen, bei dem
die Stationen einer Strecke mit einer zentralen Sende-
Empfangsstation in Verbindung stehen und jeweils mehrere
Stationen der Strecke im Gleichwellenfunk senden,
dadurch gekennzeichnet, daß die zentrale Sende-Empfangsstation den Ort jeder beweglichen Sende-Empfangsstation
zum Zeitpunkt des nächsten auszutauschenden Nachrichtentelegramms errechnet und dann nur den Empfänger der dem
errechneten Ort nächstbefindlichen Station an der
Strecke einschaltet zum Empfang eines Nachrichtentelegramms von der beweglichen Sende-Empfangsstation.

4. Funksystem nach einem der vorhergehenden Ansprüche,
dadurch gekennzeichnet, daß jeweils mehrere Sende-
Empfangsstationen längs der Strecke zu Übertragungsabschnitten zusammengefaßt sind, und daß in aneinandergrenzenden Übertragungsabschnitten von unterschiedlichen
Sende-Empfangsfrequenzen im Millimeterwellenbereich Gebrauch gemacht ist.

5. Funksystem nach Anspruch 4, dadurch gekennzeichnet,
daß die Abstände der Sende-Empfangsstationen entlang der
Strecke 1 bis 2 km betragen.

6. Funksystem nach einem der vorhergehenden Ansprüche,
dadurch gekennzeichnet, daß am Beginn der Übertragungsabschnitte Meldepunkte angeordnet sind, welche den beweglichen Sende-Empfangsstationen die im Übertragungsabschnitt benutzten Frequenzen mitteilen.

...

7. Funksystem nach einem der vorhergehenden Ansprüche, dadurch gekennzeichnet, daß am Beginn und Ende der Übertragungsstrecke Meldepunkte angeordnet sind, welche die entsprechende Sende-Empfangsstation ein- bzw. ausschalten.

8. Funksystem nach einem der vorhergehenden Ansprüche, dadurch gekennzeichnet, daß jeweils mehrere Sende-Empfangsstationen längs der Strecke zu Übertragungsabschnitten zusammengefaßt sind, und daß aneinandergrenzende Übertragungsabschnitte durch zeitliche Staffelung der Sendefolge innerhalb eines Übertragungsabschnittes und zeitliche Synchronisation an den Übergängen zwischen zwei Übertragungsabschnitten entkoppelt werden.

...

| | Europäisches Patentamt | **EUROPÄISCHER RECHERCHENBERICHT** | 0043572 Nummer der Anmeldung EP 81 10 5182 |

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | IEEE TRANSACTIONS ON VEHICULAR TECHNOLOGY, Band VT-19, Nr. 1, Februar 1970, Seiten 69-73 New York, U.S.A. F.B. WOODWORTH: "A total highway communications system using $F_1$-$F_1$ repeaters"  * Seite 72, rechte Spalte: "Modulation Techniques" - Seite 73, rechte Spalte, Zeile 3 *  -- | 1,3,8 | B 61 L 27/00 3/12 H 04 B 7/26 |
| | DE - A - 2 107 814 (LICENTIA)  * Seite 3, Zeile 22 - Seite 4, Zeile 10; Anspruch 1 *  -- | 6 | **RECHERCHIERTE SACHGEBIETE (Int. Cl.³)** |
| | DE - A - 2 201 167 (INTERNATIONAL STANDARD ELECTRIC CORP.)  * Seite 2, Zeilen 16-24 *  -- | 7 | B 61 L 27/00 27/04 25/02 3/12 H 04 B 7/26 |
| | DE - A - 2 443 816 (VEB FUNKWERK KÖPENICK)  * Anspruch *  -- | 1,2 | |
| | DE - A - 1 541 424 (LICENTIA)  * Insgesamt *  -- | 1,3 | **KATEGORIE DER GENANNTEN DOKUMENTE** |
| D | DE - A - 2 644 206 (SIEMENS)  * Ansprüche 1-5 *  --  ./. | 1,4,5,8 | X: von besonderer Bedeutung A: technologischer Hintergrund O: nichtschriftliche Offenbarung P: Zwischenliteratur T: der Erfindung zugrunde liegende Theorien oder Grundsätze E: kollidierende Anmeldung D: in der Anmeldung angeführtes Dokument L: aus andern Gründen angeführtes Dokument &: Mitglied der gleichen Patentfamilie, übereinstimmendes Dokument |

√ Der vorliegende Recherchenbericht wurde für alle Patentansprüche erstellt.

| Recherchenort | Abschlußdatum der Recherche | Prüfer |
|---|---|---|
| Den Haag | 19-10-1981 | REEKMANS |

EPA form 1503.1 06.78

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | DE - A - 2 751 417 (STANDARD ELEK-TRIK LORENZ)  <br> * Seite 4, Zeile 3 - Seite 7, Zeile 14 * <br><br> -- | 1 | |
| A | DE - C - 867 876 (SIEMENS & HALSKE) <br> * Anspruch 1 * <br><br> -- | 1 | |
| A | DE - C - 1.011 016 (SIEMENS & HALS-KE) <br> * Anspruch * <br><br> -- | 1 | RECHERCHIERTE SACHGEBIETE (Int. Cl. ³) |
| A | DE - C - 910 551 (SIEMENS & HALSKE) <br> * Anspruch * <br><br> ---- | 1 | |